# EUROPEAN PATENT APPLICATION

(11) **EP 4 304 255 A1**
(43) Date of publication of application: **10.01.2024**
(21) Application number: 22778903.9
(22) Date of filing: 29.03.2022
(51) Int. Cl.: H04W 68/00, H04W 68/02

(54) **PAGING METHOD AND APPARATUS**

(30) Priority: 29.03.2021 CN 202110333458
(71) Applicant: Huawei Technologies Co., Ltd., Longgang Shenzhen, Guangdong 518129 (CN)
(72) Inventor: XIANG, Hongyu, Shenzhen, Guangdong 518129 (CN); CHEN, Lei, Shenzhen, Guangdong 518129 (CN); XIE, Zonghui, Shenzhen, Guangdong 518129 (CN)
(74) Representative: Körber, Martin Hans
(86) International application number: PCT/CN2022/083544
(87) International publication number: WO 2022/206721

(57) **Abstract**

This application provides a paging method and apparatus. The paging method includes: determining, by an access network device or a core network device, a paging cycle based on type information of a terminal, and sending first information based on the paging cycle, where the first information is used to page the terminal. In this application, the paging cycle is determined as 2.56s according to that the type information of the terminal is REDCAP UE, so that the REDCAP UE can perform monitoring in the paging cycle of 2.56s, receive emergency broadcast in time, and obtain energy saving gains.

## Description

This application claims priority to Chinese Patent Application No. 202110333458.9, filed with the China National Intellectual Property Administration on March 29, 2021 and entitled "Paging Method and Apparatus", which is incorporated herein by reference in its entirety.

### TECHNICAL FIELD

This application relates to the communications field, and in particular, to a paging method and apparatus.

### BACKGROUND

To reduce power consumption, user equipment (user equipment, UE) uses discontinuous reception (discontinuous reception, DRX) in an idle state, IDLE and an inactive state, INACTIVE. The UE monitors one paging occasion (paging occasion, PO) every DRX cycle. In addition, to further reduce energy consumption, the UE may be configured by upper layers with extended discontinuous reception (extended discontinuous reception) eDRX. For a UE of non-narrowband Internet of Things (narrowband internet of things, NB-IoT), if the UE is configured with eDRX and the eDRX cycle is 512 radio frame length, T = 512. In other cases, the T is determined by a minimum value of the following three values, that is, a radio access network (radio access network, RAN) paging cycle (if the UE is in the inactive state), a UE-specific paging cycle (if the UE is allocated by the upper layers), and a default paging cycle.

As described above, UE with a reduced capability (reduced capability, REDCAP), for example, a wearable device, not only needs to support an energy saving requirement, but also needs to support receiving of an emergency broadcast. However, although the DRX cycle in an existing network can be configured to 2.56s to support receiving of an emergency broadcast within 4s, because a default paging cycle is usually configured to a relatively small value, for example, 1.28s, the REDCAP UE fails to use a more energy-saving paging cycle in this case. In addition, because a minimum value of the eDRX cycle is 5.12s, a requirement that emergency broadcast reception is completed within 4s cannot be met.

In a scenario in which the UE is connected to a 5G core network (5G core, 5GC) by using evolved universal terrestrial radio access (evolved universal terrestrial radio access, E-UTRA), UE in a radio resource control idle state (radio resource control_idle, RRC_IDLE) monitors a paging message from the core network (core network, CN) by detecting a paging control channel (paging control channel, PCCH), and UE (other than NB-IoT) in an RRC_INACTIVE state monitors the paging message from the core network CN and the radio access network RAN by detecting the PCCH. Except for NB-IoT UE, UE with reduced bandwidth and low complexity (bandwidth reduced and low complexity, BL) UE, and UE in enhanced coverage, other UE cannot use eDRX when they are connected to the 5GC through E-UTRA.

In addition, when an evolved NodeB (evolved node b, eNB) is connected to a 5GC, only enhanced machine-type communication (enhanced machine-type communication, eMTC) and NB-IoT UEs may use the eDRX, and other common UE such as the REDCAP UE can not use the eDRX. As a result, when the REDCAP UE using the eDRX performs cell reselection from a generation NodeB (generation node b, gNB) to the eNB, the UE cannot be paged by the network. In addition, when the eDRX cycle is 10.24s, paging modes of the eNodeB and the gNodeB are different. The eNodeB pages the UE by using the eDRX paging method with paging time window (paging time window, PTW), while the gNodeB may page the UE by using the eDRX paging method without the PTW. As a result, paging mechanisms of the 5GC and UE are different in scenarios of inter-radio access technology,RAT.

### SUMMARY

This application provides a paging method and apparatus, so that a paging cycle can be determined based on type information of a terminal device, so that the terminal device can monitor in a more flexible paging cycle, receive an emergency broadcast in time, and obtain energy saving gains.

For example, if the type of the terminal device is REDCAP UE, network side determines, according to that the type of the terminal device is REDCAP UE, that the paging cycle is 2.56s, so that the terminal device can monitor in the paging cycle of 2.56s, receive the emergency broadcast in time, and obtain the energy saving gains.

It should be noted that the terminal device in embodiments of this application may be REDCAP UE, or may be other types of UE. This is not limited in embodiments of this application.

According to a first aspect, a paging method is provided, including: A paging cycle is determined according to type information of a terminal, and first information is sent according to the paging cycle, where the first information is used for paging the terminal.

According to technical solutions provided in this application, the access network device or the core network device determines the paging cycle according to the type information of the terminal, and sends first information based on the paging cycle, where the first information is used to page the terminal. In this application, the paging cycle is determined based on the type information of the terminal device, so that the terminal device can monitor in a more flexible paging cycle, receive an emergency broadcast in time, and obtain energy saving gains.

With reference to the first aspect, in some implementations of the first aspect, the method is executed by an access network device, the paging cycle includes a discontinuous reception DRX paging cycle, and the first information includes an identity ID of the terminal. the determining the paging cycle according to the type information of the terminal includes: determining, according to the type of the terminal, that the paging cycle is DRX=2.56s. In the foregoing technical solution, the REDCAP UE can perform monitoring in the paging cycle of 2.56s, receive the emergency broadcast in time, and obtain the energy saving gains.

With reference to the first aspect, in some implementations of the first aspect, the method is executed by a core network device, the paging cycle includes an extended discontinuous reception eDRX paging cycle, a paging cycle table includes the paging cycle, and the first information includes information of a paging cycle. The determining the paging cycle according to the type information of the terminal further includes: determining a paging cycle table according to that the type of the terminal is REDCAP UE. The paging cycle table is a table of a paging cycle when the type of the terminal is REDCAP.

With reference to the first aspect or some implementations of the first aspect, and in some other possible implementations of the first aspect, the paging cycle table further includes a first bit field, where the first bit field declares the paging cycle, and at least one value of the first bit field is associated with at least one paging cycle in the paging cycle table; and the method further includes: determining, based on a first preset value of the first bit field, that the paging cycle is eDRX=2.56s.

With reference to the first aspect or some implementations of the first aspect, and in other possible implementations of the first aspect, the method further includes: receiving second information, where the second information is used to request to use the paging cycle DRX=2.56s.

With reference to the first aspect or some implementations of the first aspect, and in other possible implementations of the first aspect, the method further includes: receiving second information, where the second information is used to request to use the paging cycle eDRX=2.56s.

According to a second aspect, a paging method is provided, including: Whether to use a first parameter within a paging cycle is determined, based on type information of a terminal, where the paging cycle includes an extended discontinuous reception eDRX paging cycle, and the first parameter includes a paging time window PTW; and first information is sent based on the paging cycle, where the first information is used for paging the terminal.

According to the technical solution provided in this application, the access network device or the core network device determines, based on the type information of the terminal, whether to use a first parameter within a paging cycle, where the paging cycle includes an extended discontinuous reception eDRX paging cycle, and the first parameter includes a paging time window PTW; and sends first information based on the paging cycle, where the first information is used to page the terminal. In this application, whether to use the PTW in the paging cycle is determined based on the type information of the terminal device, so that REDCAP UE can use the eDRX mechanism in different radio access technologies RATs, and it is ensured that paging mechanisms between different UE and different RAT nodes match.

In this embodiment of this application, the access network device may be a gNB, or may be an eNB. In the prior art, the REDCAP UE does not use the PTW in the gNB, and eMTC UE uses the PTW in the eNB. Because the eMTC UE is a 4G device, running of the 4G device in 5G access network does not need to be considered, that is, whether the eMTC UE uses the PTW in the gNB does not need to be considered.

In addition, it is not difficult to understand that when the REDCAP UE does not use the PTW under the eNB, the network node needs to determine the type information of UE, that is, determine, according to whether the type information of UE is the REDCAP UE or the eMTC UE, whether the PTW is used during paging. Therefore, it may be further understood that if the REDCAP UE uses the PTW under the eNB, the network node does not need to determine the type of the UE. The reason is that both the REDCAP UE and the eMTC UE use the PTW under the eNB, and therefore the network node does not need to determine the type of the UE. Therefore, eDRX supporting solution in REDCAP UE-eNodeB-5GC needs to be added to ensure that the UE and network paging monitoring mechanism match.

With reference to the second aspect, and in some implementations of the second aspect, the method is executed by an access network device, the paging cycle includes eDRX=l 0.24s, and the first information includes an identity ID of the terminal. The determining, according to the type information of the terminal, whether to use a first parameter within a paging cycle includes: determining, according to the type of the terminal, that the REDCAP UE does not use the first parameter within the paging period. In the foregoing technical solution, the REDCAP UE can use the eDRX mechanism in different radio access technologies RATs, and it is ensured that paging mechanisms between different UEs and different RAT nodes match.

With reference to the second aspect, and in some implementations of the second aspect, the method is executed by a core network device, the paging cycle includes eDRX=10.24s, and the first information includes information of the paging cycle. The determining, according to the type information of the terminal, whether to use a first parameter in the paging cycle includes: determining, according to that the type of the terminal is REDCAP UE, that the REDCAP UE does not use the first parameter in the paging cycle. In the foregoing technical solution, the REDCAP UE can use the eDRX mechanism in different radio access technologies RATs, and it is ensured that the paging mechanisms between different UEs and different RAT nodes match.

According to a third aspect, a paging method is provided, including: First information is received, where the first information is used to page a terminal; and whether to use a paging time window PTW when monitoring paging is determined, according to type information of a camped cell, .

According to the technical solutions provided in this application, the terminal determines, based on the received paging message and the type information of the cell on which the terminal is currently camped, whether to use the PTW when monitoring paging. In this application, the terminal determines, based on the type information of the camped cell, whether to use the PTW when monitoring the paging, to ensure that paging mechanisms between different UE and different RAT nodes match.

With reference to the third aspect, and in some implementations of the third aspect, the paging cycle includes an extended discontinuous reception eDRX=10.24s, and the determining, based on the type information of the camped cell, whether to use a paging time window PTW when monitoring the paging includes: determining, based on that the type of the camped cell is a generation NodeB gNB, not to use the PTW when monitoring paging. The foregoing technical solution can ensure that the paging mechanisms between different UE and different RAT nodes match.

With reference to the third aspect or some implementations of the third aspect, and in other possible implementations of the third aspect, the method further includes: sending second information, where the second information is used to request to use a paging cycle eDRX=10.24s.

According to a fourth aspect, a paging apparatus is provided, including: A determining module is configured to determine a paging cycle according to type information of a terminal; and a sending module is configured to send first information according to the paging cycle, where the first information is used for paging the terminal.

With reference to the fourth aspect, in some implementations of the fourth aspect, the paging apparatus is an access network device, the paging cycle includes a discontinuous reception DRX paging cycle, and the first information includes an identity ID of the terminal.

The determining module is specifically configured to determine, according to that the type of the terminal is REDCAP UE, that the paging cycle is DRX=2.56s.

With reference to the fourth aspect, and in some implementations of the fourth aspect, the paging apparatus is a core network device, the paging cycle includes an extended discontinuous reception eDRX paging cycle, a paging cycle table includes the paging cycle, and the first information includes information of a paging cycle.

The determining module is further configured to determine the paging cycle table according to that the type of the terminal is REDCAP UE. The paging cycle table is the table of the paging cycle when the type of the terminal is REDCAP UE.

With reference to the fourth aspect or some implementations of the fourth aspect, and in other possible implementations of the fourth aspect, the paging cycle table further includes a first bit field, where the first bit field declares the paging cycle, and at least one value of the first bit field is associated with at least one paging cycle in the paging cycle table; and the determining module is further configured to: obtain a first preset value based on the first bit field, and determine that the paging cycle is eDRX=2.56s.

With reference to the fourth aspect or some implementations of the fourth aspect, and in some other possible implementations of the fourth aspect, the apparatus further includes: a receiving module, configured to receive second information, where the second information is used to request to use the paging cycle DRX=2.56s.

With reference to the fourth aspect or some implementations of the fourth aspect, and in other possible implementations of the fourth aspect, the apparatus further includes: the receiving module, configured to receive the second information, where the second information is used to request to use the paging cycle eDRX=2.56s.

According to a fifth aspect, a paging apparatus is provided, including: A determining module is configured to determine, based on type information of a terminal, whether to use a first parameter in a paging cycle, where the paging cycle includes an extended discontinuous reception eDRX paging cycle, and the first parameter includes a paging time window PTW. a sending module, configured to send first information based on the paging cycle, where the first information is used for paging a terminal.

With reference to the fifth aspect, and in some implementations of the fifth aspect, the paging apparatus is an access network device, the paging cycle includes eDRX=10.24s, and the first information includes an identity ID of the terminal. The determining module is specifically configured to determine, according to that a type of a terminal is REDCAP UE, not to use the first parameter in the paging period.

With reference to the fifth aspect, and in some implementations of the fifth aspect, the paging apparatus is a core network device, the paging cycle includes the eDRX=10.24s, and the first information includes information of the paging cycle.

The determining module is specifically configured to determine, according to the type of the terminal is the REDCAP UE, not to use the first parameter in the paging period.

According to a sixth aspect, a paging apparatus is provided, including: A receiving module is configured to receive first information, where the first information is used to page a terminal; and a determining module is configured to determine, according to type information of a camped cell, whether to use a paging time window PTW when monitoring paging.

With reference to the sixth aspect, and in some implementations of the sixth aspect, the paging cycle includes an extended discontinuous reception eDRX=10.24s, and the determining module is specifically configured to determine, according to a type of the camped cell is a generation NodeB gNB, that the PTW is not used when monitoring the paging.

With reference to the sixth aspect or some implementations of the sixth aspect, and in some other possible implementations of the sixth aspect, the paging apparatus further includes: a sending module, configured to send second information, where the second information is used to request to use a paging cycle eDRX=10.24s.

According to a seventh aspect, a computer program product is provided. The computer program product includes a computer program (which may also be referred to as code or instructions). When the computer program runs, a computer is enabled to perform the method according to any possible implementation of the first aspect to the third aspect.

According to an eighth aspect, a computer-readable medium is provided. The computer-readable medium stores a computer program (which may also be referred to as code or instructions). When the computer program runs on a computer, the computer is enabled to perform the method according to any possible implementation of the first aspect to the third aspect.

According to a ninth aspect, a chip system is provided, including a memory and processor, where the memory is configured to store a computer program, and the processor is configured to invoke the computer program from the memory and run the computer program, so that a communications device provided with the chip system performs the method according to any one of the possible implementations of the first to the third aspect.

The chip system may include an input circuit or interface configured to send information or data, and an output circuit or interface configured to receive information or data.

According to the technical solution provided in this application, the access network device or the core network device determines a paging cycle based on the type information of the terminal, and sends first information to the terminal, where the first information includes information about the paging cycle. In this application, the paging cycle is determined as 2.56s according to that the type information of the terminal is the REDCAP UE, so that the REDCAP UE can monitor in the paging cycle of 2.56s, receive emergency broadcast in time, and obtain energy saving gains. In addition, whether to use the PTW in the paging cycle is determined based on the type information of the terminal device, so that the REDCAP UE can use the eDRX mechanism in different radio access technologies RATs, and it is ensured that paging mechanisms between different UE and different RAT nodes match.

### BRIEF DESCRIPTION OF DRAWINGS

FIG. 1 is a schematic diagram of a system to which an embodiment of this application is applicable.
FIG. 2 is a schematic diagram of a paging scenario to which an embodiment of this application is applicable.
FIG. 3 is a schematic flowchart of a paging method according to this application;
FIG. 4 is a schematic diagram of a paging method according to an embodiment of this application.
FIG. 5 is a schematic diagram of a paging method according to another embodiment of this application.
FIG. 6 is a schematic diagram of a paging method according to another embodiment of this application.
FIG. 7 is a schematic diagram of a paging method according to another embodiment of this application.
FIG. 8 is a schematic diagram of a paging method according to another embodiment of this application.
FIG. 9 is a schematic block diagram of an example of a paging apparatus applicable to this application.
FIG. 10 is a schematic block diagram of another example of a paging apparatus applicable to this application.
FIG. 11 is a schematic block diagram of another example of a paging apparatus applicable to this application.
FIG. 12 is a schematic block diagram of another example of a paging apparatus applicable to this application.

### DESCRIPTION OF EMBODIMENTS

The following describes technical solutions of this application with reference to accompanying drawings.

The technical solutions of embodiments of this application may be applied to various communications systems, such as a global system of mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), universal mobile telecommunications system (Universal Mobile Telecommunications System, UMTS), a worldwide interoperability for microwave access (Worldwide Interoperability for Microwave Access, WiMAX) communications system, a future 5th generation (5th Generation, 5G) system, or a new radio (New Radio, NR) system.

Generally, a conventional paging system supports a limited quantity of connections and is easy to be implemented. However, with development of paging technologies, a mobile paging system not only supports the conventional paging, but also supports, for example, device to device (Device to Device, D2D) paging, machine to machine (Machine to Machine, M2M) paging, machine type paging (Machine Type Communication, MTC), and vehicle to everything (Vehicle to Everything, V2X) paging, vehicle to vehicle (Vehicle to Vehicle, V2V) paging, vehicle to infrastructure (Vehicle to Infrastructure, V2I) paging, vehicle to pedestrian (Vehicle to Pedestrian, V2P) paging, vehicle to network (Vehicle to Network, V2N) paging, and the like.

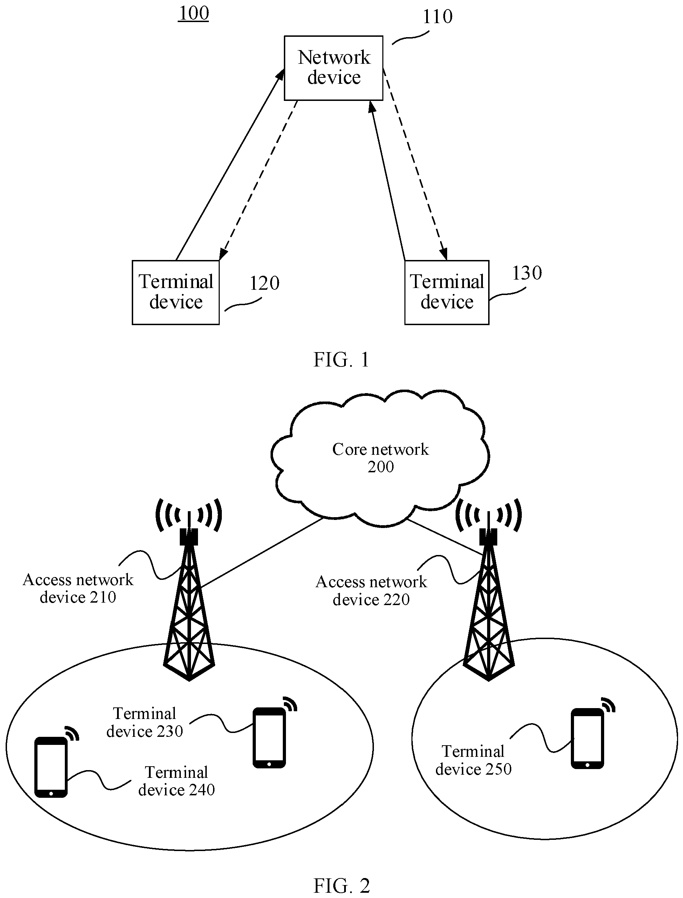

FIG. 1 is a schematic diagram of a system to which an embodiment of this application is applicable. As shown in FIG. 1, a system 100 may include a network device 110 and terminal devices 120 and 130. The network device is wirelessly connected to the terminal devices. It should be understood that FIG. 1 is described by using an example in which the system includes only one network device. However, this embodiment of this application is not limited thereto. For example, the system may alternatively include more network devices. Similarly, the system may alternatively include more terminal devices. It should be further understood that the system may also be referred to as a network. This embodiment of this application sets no limitation thereto.

The network device 110 in this embodiment of this application may be a device configured to page a terminal device. The network device may be a base transceiver station (Base Transceiver Station, BTS) in global system of mobile communications (GSM Global System of Mobile communication, GSM) or code division multiple access (Code Division Multiple Access, CDMA), or may be a NodeB (NodeB, NB) in a wideband code division multiple access (Wideband Code Division Multiple Access, WCDMA) system, or may be an evolved NodeB (Evolved NodeB, eNB or eNodeB) in a long term evolution system, or may be a radio controller in a cloud radio access network (Cloud Radio Access Network, CRAN) scenario, alternatively, the network device may be a relay station, an access point, an in-vehicle device, a wearable device, a network device in a future 5G network, a network device in a future evolved public land mobile network (Public Land Mobile Network, PLMN) network, or the like.

In addition, in the embodiments of this application, the network device 110 serves a cell, and the terminal device pages the network device by using transmission resources (for example, a frequency domain resource, namely, a spectrum resource) used by the cell. The cell may be a cell corresponding to the network device (for example, a base station). The cell may belong to a macro base station, or may belong to a base station corresponding to a small cell (small cell). The small cell herein may include a metro cell (Metro cell), a micro cell (Micro cell), a pico cell (Pico cell), a femto cell (Femto cell), and the like. These small cells have features of small coverage and low transmit power, and are applicable to providing a high-rate data transmission service. In addition, the cell may be further a hyper cell (Hypercell).

The terminal device 120 in the embodiments of this application may be referred to as user equipment (User Equipment, UE), an access terminal, a subscriber unit, a subscriber station, a mobile station, a mobile console, a remote station, a remote terminal, a mobile device, a user terminal, a terminal, a wireless paging device, a user agent, or a user apparatus. The terminal device may perform paging with one or more core networks by using a radio access network (Radio Access Network, RAN). For example, the user equipment may be a mobile phone (or referred to as a "cellular" phone) or a computer with a mobile terminal. For example, the user equipment may also be a portable, pocket-sized, handheld, computer built-in, or in-vehicle mobile device that exchange voice and/or data with the radio access network.

The terminal device 120 may be a station (STAION, ST) in a WLAN, and may be a smartcall, a portable computer, a global positioning system, a cordless phone, a session initiation protocol (Session Initiation Protocol, SIP) phone, or a wireless local loop (Wireless Local Loop. WLL) station, a personal digital assistant (Personal Digital Assistant, PDA) device, a handheld device with a radio paging function, a computing device or other processing devices connected to wireless modems, an in-vehicle device, an Internet of Vehicles terminal, a computer, a laptop computer, a handheld paging device, a handheld computing device, a satellite wireless device, a wireless modem card, a set top box (set top box, STB), a customer premises equipment (customer premise equipment, CPE), and/or other devices for paging on a wireless system, and a next generation paging system. For example, a terminal device in a 5G network or a terminal device in a future evolved public land mobile network PLMN network.

As an example instead of a limitation, in this embodiment of this application, the terminal device 130 may alternatively be a wearable device. The wearable device may also be referred to as a wearable intelligent device, and is a general term of a wearable device that is intelligently designed and developed for daily wear by using a wearable technology, for example, glasses, gloves, a watch, clothing, shoes and the like. The wearable device is a portable device that can be directly worn on the body or integrated into clothes or an accessory of a user. Wearable devices are not only hardware devices, but also powerful functions through software support, data interaction, and cloud interaction. In a broad sense, wearable intelligent devices include full-featured and large-sized devices that can implement all or a part of functions without depending on smartphones, for example, smart watches or smart glasses, and include devices that focus on only one type of application function and need to collaboratively work with other devices such as smartphones, for example, various smart bands, or smart jewelry for monitoring physical signs.

In addition, in this embodiment of this application, the terminal device 130 may alternatively be a terminal device in an internet of things (Internet of Things, IoT) system. The IoT is an important part of future information technology development, and a main technical feature of the IoT is that an article is connected to a network by using a paging technology. Thus, the intelligent network of man-machine interconnection and object interconnection is realized.

FIG. 2 is a schematic diagram of a paging scenario to which an embodiment of this application is applicable; As shown in FIG. 2, a terminal device 230 and a terminal device 240 are located in a cell provided by an access network device 210, and a terminal device 250 is located in a cell provided by an access network device 220.

It should be understood that a function of a core network 200 is mainly to provide a user connection, manage a user, and carry a service, and serve as a bearer network to provide an interface to an external network. Establishment of the user connection includes functions such as mobility management (mobile management, MM), call management (connection management, CM), switching/routing, recording notification and the like. User management includes user descriptions, quality of service (Quality of Service, QoS), user paging accounting (accounting), virtual home environment (virtual home environment, VHE), and security. (The authentication center provides security measures, including security management for mobile services and security processing for external network access.) A bearer access (access) includes an external public-switched telephone network (Public Switched Telephone Network, PSTN), an external circuit data network and a packet data network, an Internet (internet) and an Intranet (intranets), and a short message service (Short Message Service, SMS) server of the mobile network itself and the like.

In this embodiment of this application, basic services that may be provided by the core network 200 include mobile office, e-commerce, paging, an entertainment service, a travel and a location-based service, a telemetry (telemetry) service , a simple messaging service (monitoring control), and the like.

As an example instead of a limitation, the core network 200 device may include functional units: an access & mobility management function (access & mobility function, AMF), a session management function (session management function, SMF), a policy control function (policy control function), a user plane function (user plane function, UPF) and the like. These functional units may work independently, or may be combined to implement some control functions. For example, an AMF, an SMF, and a PCF may be combined to serve as a management device, to implement access control and mobility management functions such as access authentication, security encryption, and location registration of the terminal device, and session management functions such as establishment, release, and change of a user plane transmission path, and a function of analyzing some slice (slice) related data (such as, congestion) and data related to the terminal device. The UPF mainly completes functions such as routing and forwarding of user plane data, for example, the UPF is responsible for data packet filtering, data transmission/forwarding, rate control, and charging information generation of the terminal device.

The access network device 210 may include an access network/radio access network (Radio Access Network, RAN) device, and a network including a plurality of 5G-RAN nodes. The 5G-RAN node may be an access point (access point, AP), a next-generation new NodeB (NR nodeB, gNB), a next-generation evolved NodeB (ng-eNB, gNB), a transmission receive point (transmission receive point, TRP), a transmission point (transmission point, TP), or some other access node. The 5G-RAN node may be further classified into a central unit (central unit, CU) and a distributed unit (distributed unit, DU).

In addition, the access network device 220 may be a base transceiver station (Base Transceiver Station, BTS) in an SM or a CDMA, or may be a NodeB (NodeB, NB) in a WCDMA, or may be an evolved NodeB (Evolutional NodeB, eNB, or eNodeB) in LTE, a relay station, or an access point, or an in-vehicle device, a wearable device, an access network device in a future 5G network, an access network device in a future evolved PLMN network, or the like. This is not particularly limited in this application.

It should be noted that, in this embodiment of this application, the access network device 220 may provide a service for a cell, and the terminal device uses a transmission resource used by the cell. (for example, a frequency domain resource, or a spectrum resource) to page with an access network device, where the cell may be a cell corresponding to the access network device (for example, a base station), and the cell may belong to a macro base station, or may belong to a base station corresponding to a small cell (Small cell). The small cell herein may include: a metro cell (metro cell), a micro cell (micro cell), a pico cell (pico cell), a femto cell (femto cell), and the like. These small cells have characteristics of small coverage and low transmit power, and are applicable to providing a highspeed data transmission service.

Each access network device may include one or more antennas. Each access network device may page a plurality of terminal devices. The access network device may send data or information to the terminal device through a forward link (also referred to as a downlink), and receive data or information from the terminal device through a reverse link (also referred to as an uplink). Each antenna (or an antenna group including a plurality of antennas) and/or an area designed for paging is referred to as a sector of the access network device. For example, the antenna group may be designed to page a terminal device in a sector in a coverage area of the access network device. The access network device may send signals to all terminal devices in a corresponding sector by using a single antenna or a multiantenna transmit diversity. In a process in which the access network device pages the terminal device by using a forward link, a transmit antenna of the access network device may also improve a signal-to-noise ratio of the forward link by using beamforming.

In this embodiment of this application, related terminal devices 230, 240, and 250 are described in detail in FIG. 1, and details are not described herein again.

It should be noted that the foregoing "device" may also be referred to as an entity, a network element, an apparatus, a module, or the like. This is not particularly limited in this application. In addition, in this application, for ease of understanding and description, descriptions of the "network element" is omitted in part of descriptions. For example, a RAN network element is referred to as a RAN for short. In this case, the "RAN network element" should be understood as the RAN network element or a RAN entity. Omit the descriptions of the same or similar situations.

In addition, aspects or features in embodiments of this application may be implemented as a method, an apparatus or a product that uses standard programming and/or engineering technologies. The term "product" used in this application covers a computer program that can be accessed from any computer-readable component, carrier or medium. For example, the computer-readable medium may include, but is not limited to, a magnetic storage device (for example, a hard disk, a floppy disk, or a magnetic tape), an optical disc (for example, a compact disc (Compact Disc, CD), a digital versatile disc (Digital Versatile Disc, DVD), or the like), a smart card, and a flash memory device (for example, an erasable Programmable Read-Only Memory (Erasable Programmable Read-Only Memory, EPROM)), a card, a stick, a key drive or the like.). In addition, various storage media described in this specification may represent one or more devices and/or other machine-readable media that are configured to store information. The term "machine readable media" may include but is not limited to a radio channel, and various other media that can store, contain and/or carry an instruction and/or data.

It should be noted that, in the embodiments of this application, a plurality of application programs may be run at the application layer. In this case, an application program for performing the method in the embodiments of this application and an application program used to control a receive end device to complete an action corresponding to received data may be different application programs.

To facilitate understanding of the technical solutions provided in this application, the following briefly describes a paging procedure and paging message receiving.

There is no RRC connection between UE in a radio resource control idle state (radio resource control_idle, RRC_IDLE) and the network. For the UE in the radio resource control inactive state (radio resource control_inactive, RRC_INACTIVE), although the RRC connection is established with the network, the connection is suspended. If the network has downlink data that needs to be sent to the UE in the RRC_IDLE or the RRC_INACTIVE state, the network needs to first page the UE by using a paging (paging) procedure, to instruct the UE to establish or resume the RRC connection. Data can then be transferred. That is, paging is initiated by the network. In an NR, the paging may be initiated by a core network, which is referred to as a core network paging (core network paging, CN paging), or may be initiated by a radio access network (radio access network, RAN), which is referred to as a RAN paging.

If the UE is in the RRC_IDLE state, no RRC connection exists between the UE and the next generation NodeB (gNB), and no RRC context of the UE exists, that is, the gNB does not know that the UE exists. From a perspective of the core network, in this case, the UE is in a connection management idle (connection management idle, CM_IDLE) state, for example, a state of the UE in an access and mobility management function (access and mobility management function, AMF). There is no non-access stratum (non-access stratum, NAS) connection between the UE and the core network, but a unique identifier has been allocated in a tracking area (tracking area, TA) in which the UE is located, and the UE has been registered in the AMF. A context exists in the AMF. If the core network needs to send downlink data or downlink NAS signaling to a UE in the CM_IDLE state, the AMF sends a paging message to all gNodeBs in all TAs in which the UE is registered. Then, the gNodeB sends a paging message over air interface to page the UE. After receiving the paging message, a UE in the RRC_IDLE state tends to initiate an RRC connection setup procedure to receive the downlink data.

The AMF interworks with the wireless network, receives and sends NAS messages for communication with UEs, manages registration, mobility, reachability, encryption, and authentication of terminals, and transmits NAS messages between the UE and SMF.

In the RRC_INACTIVE state, the RRC connection between the UE and the gNodeB is suspended, although both the UE and the gNodeB store the RRC context. At the same time, the connection between the UE and the core network is still maintained, that is, from the perspective of the core network, the UE is in the CM_CONNECTED state. When the network needs to send data to the UE in the RRC_INACTIVE state, for example, when downlink data arrives, the network needs to page the UE because the RRC connection is suspended. In addition, because the core network considers that the UE is in a connected state at this time, the core network does not initiate paging, but a RAN node, for example, a next generation NodeB (gNB), initiates the paging.

In the RRC_INACTIVE state, a last gNB node serving in the UE saves the UE context and maintains a connection to the core network. If the last gNB serving in the UE receives the downlink data or the NAS signaling related to the UE from the core network when the UE is in the RRC_INACTIVE state, the gNB may receive the downlink data or the NAS signaling related to the UE in a radio access network (radio access network) to which the UE belongs. The UE is paged in all cells included in a RAN-based notification area (RAN-based notification area, RNA). If the RNA includes a cell on a neighboring gNodeB, the gNodeB sends an Xn application protocol (Xn application protocol, Xn AP) RAN paging message to the neighboring gNodeB to notify the neighboring gNodeB to page the UE in the corresponding cell. After receiving a paging message, a UE in the RRC_INACTIVE state initiates an RRC connection setup and recovery process to receive downlink data. The RAN notification area herein is a RAN-based notification area managed by an NG-RAN (for example, a gNB), and the NG-RAN knows an RNA to which the UE belongs.

The UE in the RRC_IDLE or RRC_INACTIVE state supports receiving a paging message in a discontinuous reception (discontinuous reception, DRX) manner to reduce power consumption. The DRX is also referred to as paging DRX. A discontinuous reception cycle (DRX cycle) is configured by the network device, and the DRX cycle is also referred to as a paging cycle. With DRX, a UE in the RRC_IDLE or RRC_INACTIVE state "wakes up" to receive the paging messages only during a predefined period of time, and remains in the "sleep" state and stops receiving the paging messages during other periods of time. This reduces the power consumption. The battery life of the UE is increased.

For paging DRX, the UE in the RRC_IDLE or RRC_INACTIVE state attempts to receive a PDCCH scrambled by a paging radio network temporary identifier (paging radio network temporary identifier, P-RNTI) only on a specific paging occasion (paging occasion, PO) in each paging cycle. In an NR system, a PO is a monitoring occasion (monitoring occasion) of a group of physical downlink control channels (physical downlink control channel, PDCCH). One PO may include a plurality of time slots (time slots). For example, the time slot may be a subframe or an orthogonal frequency division multiplexing (orthogonal frequency division multiplexing, OFDM) symbol. The network device may send, in the PO, downlink control information (downlink control information, DCI) used to schedule the paging message. In addition, a paging frame (paging frame, PF) is a radio frame, and may include one or more POs or begin points of a PO. When monitoring the PO, the terminal device first determines a location of the PF, and then determines a location of the PO associated with the PF. It should be noted that one PO associated with the PF may start from within the PF, or may start from after the PF. The UE may determine, based on paging configuration parameters and the UE_ID, a PO location that needs to be monitored by the UE. For details, refer to the prior art of an NR and an LTE. This is irrelevant to a specific solution of this application. Details are not described herein again.

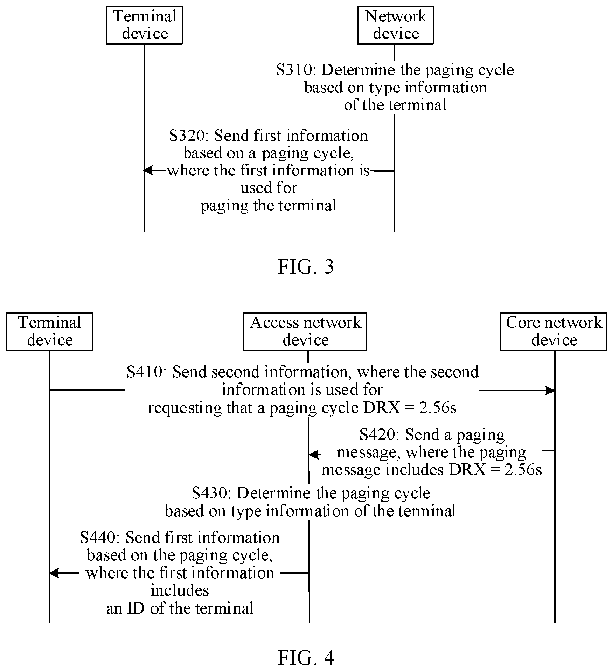

FIG. 3 is a schematic flowchart of a reduced capability (reduced capability, REDCAP) UE paging solution when a paging cycle is less than or equal to 10.24s according to this application. The method includes the following steps:

S310. A network device determines a paging cycle based on terminal type information.

S320. The network device sends first information to the terminal device based on the paging cycle, where the first information is used to page the terminal.

Specifically, the network device may be an access network device, or may be a core network device. The first information may be a paging message, where the paging message includes a N2 Paging and a UU Paging.

In a possible implementation, the network device is the access network device, the paging cycle is a DRX paging cycle, and the access network device determines, according to that the type of the terminal is REDCAP UE, that the paging cycle is DRX=2.56s. The access network device sends the UU Paging (UU Paging) to the terminal device. The UU Paging includes a UE ID. To be specific, after receiving the UU Paging, UE with a specific ID performs monitoring paging at T=2.56s.

In another possible implementation, the network device is the core network device, the paging cycle is an eDRX paging cycle, and the core network device determines, according to that a terminal type is REDCAP UE, that the paging cycle is eDRX=2.56s, and sends the N2 Paging (N2 Paging) to the access network device, where the N2 Paging not only includes the UE ID, but also includes information that is used by the core network to instruct the access network to perform paging, for example, the paging cycle. After receiving the paging message, the access network device sends the UU Paging to the terminal device. After receiving the message, the UE with a specific ID performs monitoring and paging at T=2.56s.

It should be noted that the first information is not limited to the foregoing paging message, that is, the first information may also be other indication information that instructs the specific UE to perform paging according to a specific period T. It should be understood that this is not limited in this embodiment of this application.

FIG. 4 is a schematic flowchart of an embodiment according to this application, as shown in FIG. 4.

S410.A terminal device sends second information to an access network device, where the second information is used to request to use a paging cycle DRX=2.56s.

Specifically, the REDCAP UE camps on a RAN node, negotiates with a core network device through registration, enhances a function of the existing RAN node, and declares, by system information broadcast, whether a eNB supports a new feature.

It should be noted that, not supporting the new feature may be understood as that a base station can perform paging only according to an existing method, that is, the base station can select only a minimum DRX cycle value from a RAN paging cycle, a UE-specific paging cycle, and a default paging cycle to perform paging.

In a possible implementation, if the system information broadcast declares that the eNB supports the new feature, the UE camps on the RAN node, and requests the core network device to use the DRX cycle = 2.56s.

In another possible implementation, if the system information broadcast declares that the eNB does not support the new feature, the UE chooses not to camp on the RAN node, or the UE chooses to camp on the RAN node, but does not request the core network device to use the DRX cycle = 2.56s. It should be understood that this is not limited in this embodiment of this application.

S420. The core network device sends first information to the access network device, where the first information includes the paging cycle DRX=2.56s.

Specifically, if downlink data arrives at a core network (core network, CN), the CN sends the first information including the DRX period = 2.56s to the corresponding RAN node in the tracking area TA.

It should be noted that RAN nodes in a same TA may support a new function enhancement feature, or may not support the new function enhancement feature.

S430. The access network device determines a paging cycle based on the type information of the terminal.

For the RAN node that supports the new feature, because the first information carries the type information prompt of the terminal device, the RAN node selects an adapted DRX parameter configuration according to the type prompt information of the terminal device.

For example, if the UE type is REDCAP UE, the RAN node configures a paging cycle DRX cycle T=2.56s. If the UE type is not REDCAP UE, the paging cycle T is determined according to an existing method. In other words, the access network device can select only one smallest DRX cycle value from the RAN paging cycle, the UE-specific paging cycle, and the default paging cycle as the paging cycle T.

It should be understood that the foregoing type information prompt may be a display prompt, for example, 1 bit, that is, when the value is 1, it declares that the type of the terminal device is the REDCAP UE.

It should be understood that the foregoing type information prompt may also be an implicit prompt. For example, if the base station stores a mapping relationship table, the base station may learn, based on an existing UE Paging Identity in N2 PAGING (paging information), whether the type of the terminal device is the REDCAP UE.

It should be further understood that the foregoing type information prompt is merely an example for description, that is, the type information prompt is not limited to the foregoing bit value and the mapping relationship table. This is not limited in this embodiment of this application.

S440. Send the first information according to the paging cycle, where the first information includes an ID of the terminal.

Specifically, the access network device sends the first information to the terminal device. The first information is specifically a UU Paging (UU Paging), and the UU Paging includes a UE ID (for example, the ID is 02, 04, and 08). To be specific, after the terminal device receives the paging message, when the access network device performs paging in the period T, only the terminal device with a specific ID (02, 04, 08) performs monitoring paging in the period T.

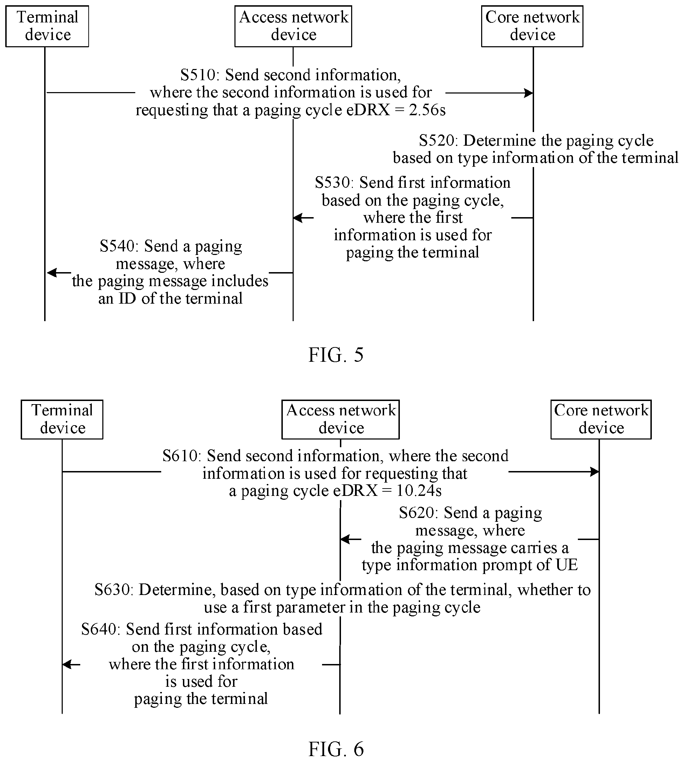

As shown in FIG. 5, FIG. 5 is a schematic flowchart of another embodiment according to this application.

S510. A terminal device sends second information to a core network device, where the second information is used to request to use a paging cycle eDRX=2.56s.

It should be noted that, the core network device redefines an existing eDRX parameter mapping, so that when the REDCAP UE negotiates an eDRX parameter configuration, the REDCAP UE can be mapped to an eDRX cycle whose T is 2.56s.

It should be understood that the parameter mapping relationship may be a configuration mapping table, or may be in another mapping form. This is not limited in this embodiment of this application.

In a possible implementation, if the system information broadcast declares that an eNB supports a new feature, UE camps on a RAN node, and requests to use the eDRX cycle = 2.56s from the core network device.

In another possible implementation, if the system information broadcast declares that the eNB does not support the new feature, the UE chooses not to camp on the RAN node, or camps on the RAN node, but does not request the core network device to use the eDRX period = 2.56s. It should be understood that this is not limited in this embodiment of this application.

In another possible implementation, if the core network device does not support redefined REDCAP UE to adapt to the eDRX cycle, the core network device rejects the eDRX request of the UE in the registration process.

S520. The core network device determines a paging cycle based on the type information of the terminal.

Specifically, the core network device determines a corresponding paging cycle table based on the type information of the UE. As shown in Table 1, Table 1 is a paging cycle table corresponding to the REDCAP UE, and different types of UE are corresponding to different paging cycle tables. The core network device determines a corresponding paging cycle table based on the type information of the terminal. In other words, if the terminal device is REDCAP UE, Table 1 is corresponding; if the terminal device is eMTC UE, Table 1 is not corresponding.

For example, the core network device configures the following table based on a mapping relationship between a period value of the REDCAP UE and a quantity of bits. A specific mapping relationship is shown in Table 1.

**Table 1 Paging cycle table**

| Quantity of bits | eDRX cycle |
|---|---|
| 0000 | 2.56 seconds |
| 0001 | ... |
| 0010 | ... |
| 0011 | ... |
| 0100 | ... |
| 0101 | ... |
| 0110 | ... |
| 0111 | ... |
| 1000 | ... |
| 1001 | ... |
| 1010 | ... |
| 1011 | ... |
| 1100 | ... |
| 1101 | ... |
| 1110 | ... |
| 1111 | 10485.76 seconds |

It can be learned from the Table 1 that, when the bit value of the first bit field is "0000", a mapped eDRX period is 2.56s; however, when the bit value of the first bit field is " 1111, the mapped eDRX period is 10485.76s.

It should be understood that the specific mapping relationship and specific values in the Table 1 are merely examples for description. This is not limited in this embodiment of this application.

S530. The core network device sends first information to the access network device, where the first information is used to page the terminal.

Specifically, when downlink data arrives at the core network device, the core network device sends the first information to the access network device, where the first information is a N2 Paging (N2 Paging), and the N2 Paging includes a parameter that eDRX=2.56s. When receiving the N2 Paging, the access network device performs paging in a paging manner indicated by the core network device, that is, the access network device performs the paging in a manner in which eDRX=2.56s.

S540. The access network device sends a paging message to the terminal device, where the paging message includes an ID of the terminal.

Specifically, the access network device sends the UU Paging to the terminal device, and the UU Paging includes the UE ID. For example, the UU Paging sent by the access network device includes the UE ID (02, 04, 08). That is, after the terminal device receives the UU Paging, and when the access network device performs paging in the period T, only the terminal device with a specific ID (02, 04, 08) performs monitoring paging in the period T.

In the foregoing, the paging methods provided in FIG. 4 and FIG. 5 can enable the terminal to perform monitoring at a paging period of 2.56s, receive an emergency broadcast in time, and obtain energy saving gains.

In the following, eDRX support solutions under different radio access technologies (radio access technology, RAT) are supplemented with reference to FIG. 6 to FIG. 8, to ensure paging mechanism matching between different UE and different RAT nodes.

It should be noted that, in an existing method, an enhanced machine type communication (enhanced machine-type communication, eMTC) UE uses a paging time window (paging time window, PTW) under an eNB, and REDCAP UE does not use a PTW under a gNB. According to the existing method, the REDCAP UE currently does not support eDRX under the eNB. Assuming that the REDCAP UE supports the eDRX under the eNB, and the REDCAP UE uses the PTW under the eNB, the eNB does not need to determine the UE category information. This is because both the eMTC UEs and the REDCAP UEs all use the PTW. However, assuming that the REDCAP UE does not use the PTW under the eNB, the eNB needs to determine specific UE category information in a paging process.

It should be understood that, in the embodiments of FIG. 6 to FIG. 8 of this application, mainly for a paging cycle of 10.24s, an eDRX support solution under the REDCAP UE-eNB-5GC is supplemented, to ensure that the UE and the network censorship paging mechanism match.

FIG. 6 is a schematic flowchart of another embodiment according to this application, as shown in FIG. 6.

S610. The terminal device sends second information to the core network device, where the second information is used to request that a paging cycle eDRX=10.24s.

Specifically, REDCAP UE camps on a RAN node, negotiates with the core network device through registration, enhances a function of the existing RAN node, and declares, by system information broadcast, whether an eNB supports a new feature. The terminal device UE sends the second information to the core network device, where the second information is used to request to use the paging cycle eDRX=10.24s.

In a possible implementation, if the system information broadcast declares that the eNB supports the new feature, the UE camps on the RAN node, and requests the network device to use the paging cycle eDRX = 10.24s.

In another possible implementation, if the system information broadcast declares that the eNB does not support the new feature, the UE chooses not to camp on the RAN node, or camps on the RAN node, but does not request the network device to use the paging cycle eDRX = 10.24s. It should be understood that this is not limited in this embodiment of this application.

S620. The core network device sends a paging message to the access network device, where the paging message carries a terminal type information prompt.

It should be understood that the access network device may be an eNB base station, or may be a gNB base station. The terminal type information prompt may be an explicit prompt, or may be an implicit prompt. This is not limited in this embodiment of this application.

S630. The access network device determines, based on the type information of the terminal, whether to use a first parameter in the paging cycle.

Specifically, for the RAN node that supports the new feature, because the N2 Paging message received by the node carries the UE type information prompt, the eNB node performs paging for UE type adaptation. That is, if the type information of the UE is REDCAP UE, the PTW is not used during paging by the eNB. If the type information of the UE is an eMTC UE, the PTW is used during paging on the eNodeB.

It should be understood that content of the type information prompt has been explained and described in the foregoing embodiment, and details are not described herein again.

S640. The access network device sends first information to the terminal device, where the first information is used to page the terminal.

Specifically, the first information is a UU Paging (UU Paging), and the UU Paging includes a UE ID. In other words, when the UE ID included in the UU Paging received by the terminal device is (02, 04, 05), it may be understood that: the terminal device whose UE ID is (02, 04, 05) is a REDCAP UE.

In this case, in an entire paging process of the base station, the base station does not use the PTW when paging the terminal device whose UE ID is (02, 04, 05). Correspondingly, the terminal device whose UE ID is (02, 04, 05) does not use the PTW in a paging monitoring process.

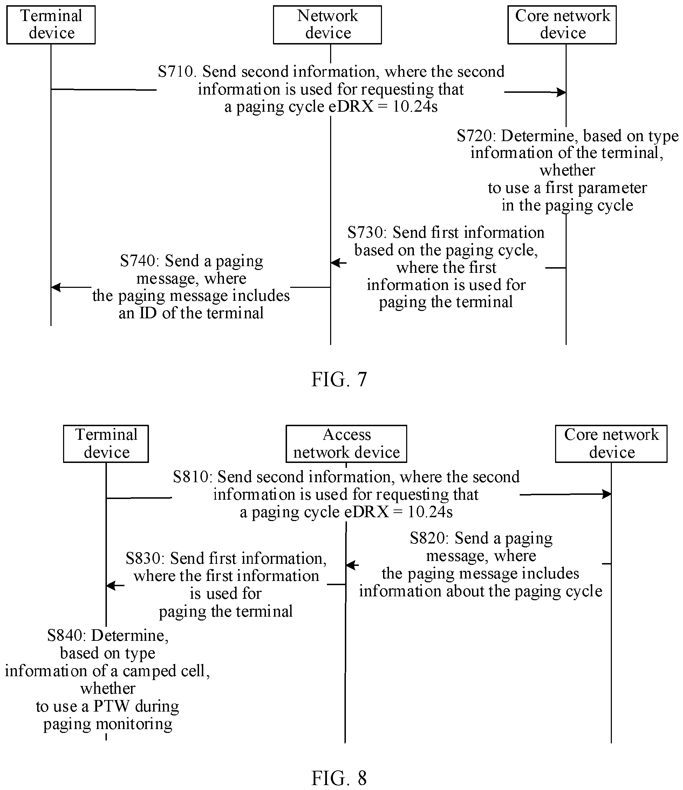

It should be noted that, in another possible implementation, as shown in FIG. 7, in S720, the core network device determines, based on the type information of the terminal device, whether to use the first parameter in the paging cycle. In step 730, the core network device sends first information based on the paging cycle, where the first information is used to page the terminal.

Specifically, when downlink data arrives at the core network device, and the core network device finds that the paging cycle of the corresponding UE is eDRX = 10.24s, the core network device needs to determine, based on the type information of the UE, whether to instruct the access network device to use the PTW during paging. In other words, the core network device determines, based on the type information of the UE, whether to configure the PTW in the eDRX parameter.

If the type information of the UE is REDCAP UE, the core network device does not configure the PTW in the specific eDRX parameter configuration. Correspondingly, in S730, the cycle information included in a N2 Paging (N2 Paging) sent by the core network device to the access network device does not include the PTW.

If the type information of the UE is eMTC UE, the core network device configures the PTW in the specific eDRX parameter configuration. Similarly, in S730, the cycle information included in the N2 Paging (N2 Paging) sent by the core network device to the access network device includes the PTW.

It should be understood that S710 corresponds to S610, and S740 corresponds to S640. Details are not described herein again in this application.

It should be further noted that, in another possible implementation, as shown in FIG. 8, in S820, the core network device sends a paging message to the access network device, where the paging message includes information about a paging cycle.

Specifically, when downlink data arrives at the core network device, the core network device sends a N2 Paging (N2 Paging) including a paging cycle eDRX=10.24s to the corresponding access network device in the TA. After receiving the N2 Paging, the access network device does not need to determine the type information of the terminal device to be paged, and different base stations perform paging in different manners, that is, the eNB performs paging in a PTW manner. The gNodeB performs paging in a manner that does not use the PTW.

In S830, the terminal device receives first information sent by the access network device, where the first information is used to page the terminal. The first information is a UU Paging (UU Paging), and the UU Paging includes a UE ID.

In S840, the terminal device determines, based on the type information of the cell to be camped on, whether to use the PTW during paging monitoring.

If the REDCAP UE camps on the gNodeB, the REDCAP UE does not use PTW when monitoring paging.

If the REDCAP UE is camping on the eNB, the REDCAP UE uses PTW when monitoring the paging.

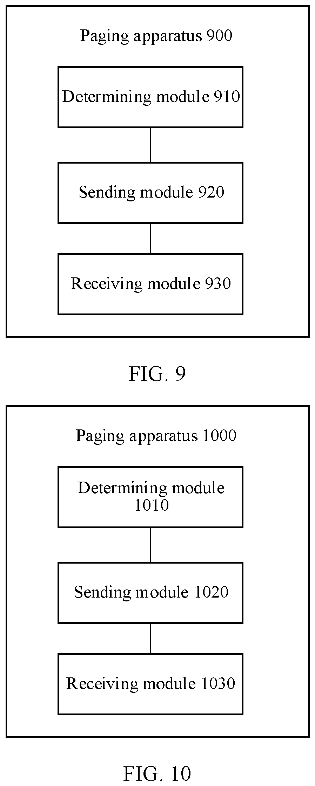

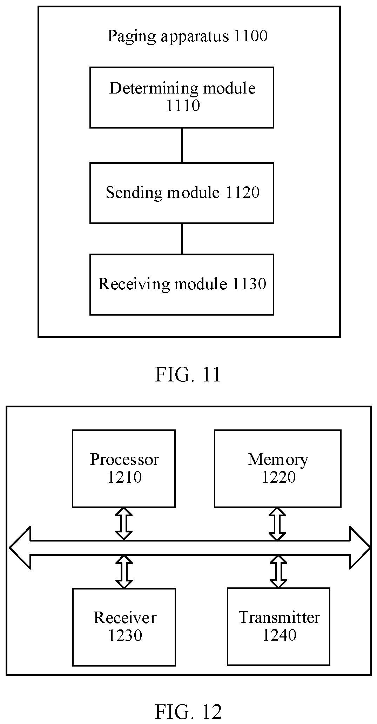

The foregoing describes in detail the paging methods in the embodiments of this application with reference to FIG. 3 to FIG. 8. The following describes in detail a communications apparatus in the embodiments of this application with reference to FIG. 9 and FIG. 12.

FIG. 9 is a schematic diagram of a paging apparatus according to an embodiment of this application. The paging apparatus is applied to the access network device or the core network device in the method embodiment in FIG. 3 or FIG. 4, or may be a component for implementing the method in the embodiment in FIG. 4 or FIG. 5, for example, a chip. FIG. 9 is a schematic block diagram of a paging apparatus 900 according to an embodiment of this application. The paging apparatus 900 includes:
a determining module 910, configured to determine a paging cycle according to type information of a terminal;
a sending module 920, configured to send first information according to the paging cycle, where the first information is used to page the terminal.

In a possible implementation, the paging apparatus is an access network device, the paging cycle includes a discontinuous reception DRX paging cycle, and the first information includes an identity ID of the terminal,
the determining module 910 is specifically configured to determine that the paging cycle is DRX=2.56s according to that the type of the terminal is REDCAP UE.

In another possible implementation, the paging apparatus is a core network device, the paging cycle includes an extended discontinuous reception eDRX paging cycle, a paging cycle table includes the paging cycle, and the first information includes information about the paging cycle,
the determining module 910 is further configured to:
determine the paging cycle table according to that the type of the terminal is REDCAP UE;

The paging cycle table is a table of the paging cycle when the terminal type is REDCAP UE.

In another possible implementation, the paging cycle table further includes a first bit field, the first bit field indicates the paging cycle, and at least one value of the first bit field is associated with at least one paging cycle in the paging cycle table,
the determining module 910 is further configured to:
take a first preset value according to the first bit field, and determine that the paging cycle is eDRX=2.56s.

In another possible implementation, the paging apparatus 900 further includes:
a receiving module 930, configured to receive second information, where the second information is used to request to use the paging cycle DRX=2.56s.

In another possible implementation, the paging apparatus further includes:
a receiving module 930, configured to receive second information, where the second information is used to request to use the paging cycle eDRX=2.56s.

FIG. 10 is a schematic diagram of a paging apparatus according to an embodiment of this application. The paging apparatus is applied to the access network device or the core network device in the method embodiments in FIG. 5 to FIG. 7, or may be a component for implementing the methods in the embodiments in FIG. 6 to FIG. 7, for example, a chip. FIG. 10 is a schematic block diagram of a paging apparatus 1000 according to an embodiment of this application. The paging apparatus 1000 includes:
a determining module 1010, configured to determine, according to type information of a terminal, whether to use a first parameter in a paging cycle , where the paging cycle includes an extended discontinuous reception eDRX paging cycle, and the first parameter includes a paging time window PTW;
a sending module 1020, configured to send first information according to the paging cycle, where the first information is used to page the terminal.

In a possible implementation, the paging apparatus is an access network device, the paging cycle includes eDRX=10.24s, and the first information includes an identity ID of the terminal,
the determining module 1010 is specifically configured to:
determine according to that the type of the terminal is REDCAP UE, not to use the first parameter in the paging cycle.

In another possible implementation, the paging apparatus is a core network device, the paging cycle includes eDRX=10.24s, and the first information includes information about the paging cycle,
the determining module 1010 is specifically configured to:
determine, according to that the type of the terminal is the REDCAP UE, not to use the first parameter in the paging cycle.

FIG. 11 is a schematic diagram of a paging apparatus according to an embodiment of this application. The paging apparatus is applied to the terminal device in the method embodiment in FIG. 8, or may be a component for implementing the method in the embodiment in FIG. 8, for example, a chip. FIG. 11 is a schematic block diagram of a paging apparatus 1100 according to an embodiment of this application. The paging apparatus 1100 includes:
a receiving module 1110, configured to receive first information, where the first information is used to page a terminal;
the determining module 1120 is configured to determine, according to the type information of a camped cell, whether to use a paging time window PTW during paging monitoring.

In a possible implementation, the paging cycle includes extended discontinuous reception eDRX=10.24s,
the determining module 1110 is specifically configured to:
determine, according to that the type of the camped cell is a next-generation NodeB, that the PTW is not used during the paging monitoring.

In another possible implementation, the paging apparatus further includes:
the sending module 1130, configured to send second information, where the second information is used to request to use a paging cycle eDRX=10.24s.

FIG. 12 is a schematic structural diagram of a communications apparatus 1200 according to an embodiment of this application. It should be understood that the paging apparatus 1200 shown in FIG. 12 is merely an example. The apparatus in this embodiment of this application may further include another module or unit, or include modules whose functions are similar to those of the modules in FIG. 12.

The communications apparatus 1200 may include one or more processors 1210, one or more memories 1220, a receiver 1230, and a transmitter 1240. The receiver 1230 and the transmitter 1240 may be integrated together to obtain a transceiver. The memory 1220 is configured to store program code executed by the processor 1210. The processor 1210 may be integrated with the memory 1220, or the processor 1210 is coupled to one or more memories 1220, and is configured to invoke instructions in the memory 1220.

In an embodiment, the processor 1210 may be configured to implement an operation or a step that can be implemented by the determining module 910 in FIG. 9, and the receiver 1230 may be configured to implement an operation or a step that can be implemented by the receiving module 930 in FIG. 9.

In another embodiment, the processor 1210 may be configured to implement operations or steps that can be implemented by the determining module 1010 in FIG. 10. The receiver 1230 and the transmitter 1240 may be configured to implement operations or steps that can be implemented by the receiving module 1030 and the sending module 1020 in FIG. 10.

In another embodiment, the processor 1210 may be configured to implement operations or steps that can be implemented by the determining module 1110 in FIG. 11, and the receiver 1230 and the transmitter 1240 may be configured to implement operations or steps that can be implemented by the receiving module 1130 and the sending module 1120 in FIG. 11.

An embodiment of this application further provides a computer-readable storage medium. The computer-readable storage medium stores a computer program used to implement the method in the foregoing method embodiments. When the computer program is run on a computer, the computer is enabled to implement the method in the foregoing method embodiments.

An embodiment of this application further provides a system chip. The system chip includes a processing unit and a communication unit. The processing unit may be, for example, a processor, and the communication unit may be, for example, an input/output interface, a pin, a circuit, or the like. The processing unit may execute computer instructions, so that the chip in the communications apparatus performs any edge application server selection method provided in the embodiments of this application.

The foregoing processor may be an integrated circuit chip, and has a signal processing capability. In an implementation process, steps in the foregoing method embodiments can be implemented by using a hardware integrated logical circuit in the processor, or by using instructions in a form of software. The foregoing processor may be a general purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and the processor reads a message in the memory and completes the steps in the foregoing method in combination with hardware of the processor.

It may be understood that the memory element mentioned in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that "one embodiment" or "an embodiment" mentioned throughout the specification declares that a particular characteristic, structure or property that is related to the embodiment is included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the terms "system" and "network" may be used interchangeably in this specification.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist independently physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A paging method, comprising:
determining a paging cycle according to type information of a terminal; and
sending first information based on the paging cycle, wherein the first information is used to page the terminal.

2. The method according to claim 1, wherein the method is performed by an access network device, the paging cycle comprises a discontinuous reception DRX paging cycle, and the first information comprises an identity ID of the terminal,
the determining a paging cycle based on the type information of the terminal comprises:
Determining that the paging cycle is DRX=2.56s according to the type of the terminal for REDCAP UE.

3. The method according to claim 1, wherein the method is executed by a core network device, the paging cycle comprises an extended discontinuous reception eDRX paging cycle, a paging cycle table comprises the paging cycle, and the first information comprises information of the paging cycle,
the determining a paging cycle according to the type information of the terminal further comprises:
determining the paging cycle table according to that the type of the terminal is REDCAP UE; and
the paging cycle table is a table of a paging cycle when the type of the terminal is REDCAP UE.

4. The method according to any one of claims 1 to 3, wherein the paging cycle table further comprises a first bit field, the first bit field declares the paging cycle, and at least one value of the first bit field is associated with at least one paging cycle in the paging cycle table,
the method further comprises:
obtaining a first preset value based on the first bit field, to determine that the paging cycle is eDRX=2.56s.

5. The method according to claim 2, wherein the method further comprises:
receiving second information, wherein the second information is used to request to use the paging cycle DRX=2.56s.

6. The method according to claim 4, wherein the method further comprises:
receiving second information, wherein the second information is used to request to use the paging cycle eDRX=2.56s.

7. A paging method, comprising:
determining, based on type information of a terminal, whether to use a first parameter in a paging cycle, wherein the paging cycle comprises an extended discontinuous reception eDRX paging cycle, and the first parameter comprises a paging time window PTW; and
sending first information based on the paging cycle, wherein the first information is used to page the terminal.

8. The method according to claim 7, wherein the method is performed by an access network device, the paging cycle comprises eDRX=10.24s, and the first information comprises an identity ID of the terminal,
the determining, according to the type information of the terminal, whether to use the first parameter in the paging cycle comprises:
determining, according to that the type of the terminal is REDCAP UE, to skip using the first parameter in the paging cycle.

9. The method according to claim 7, wherein the method is performed by a core network device, the paging cycle comprises eDRX=10.24s, and the first information comprises information of the paging cycle.

10. The method according to claim 9, wherein the determining, according to the type information of the terminal, whether to use a first parameter within a paging period comprises:
determining, according to that the type of the terminal is REDCAP UE, to skip using the first parameter in the paging cycle.

11. A paging method, comprising:
receiving first information, wherein the first information is used to page a terminal; and
determining, according to type information of a camped cell, whether to use paging time window PTW when monitoring paging.

12. The method according to claim 11, wherein the paging cycle comprises an extended discontinuous reception eDRX=10.24s,
the determining, according to the type information of the camped cell, whether to use the paging time window PTW when monitoring the paging comprises:
determining, according to that the type of the camped cell is a next generation nodeB, gNB, to skip using the PTW when monitoring the paging.

13. The method according to claim 12, wherein the method further comprises:
sending second information, wherein the second information is used to request to use a paging cycle eDRX=10.24s.

14. A paging apparatus, comprising:
a determining module, configured to determine a paging cycle according to type information of a terminal; and
a sending module, configured to send first information based on the paging cycle, wherein the first information is used to page the terminal.

15. The paging apparatus according to claim 14, wherein the paging apparatus is an access network device, the paging cycle comprises a discontinuous reception DRX paging cycle, and the first information comprises an identity ID of the terminal; and
the determining module is specifically configured to:
Determining that the paging cycle is DRX=2.56s according to that the type of the terminal is REDCAP UE.

16. The paging apparatus according to claim 14, wherein the paging apparatus is a core network device, the paging cycle comprises an extended discontinuous reception eDRX paging cycle, a paging cycle table comprises the paging cycle, and the first information comprises information of the paging cycle,
the determining module is further configured to:
determining the paging cycle table according to that the type of the terminal is REDCAP UE;
The paging cycle table is a table of the paging cycle when the type of the terminal is REDCAP UE.

17. The paging apparatus according to claim 16, wherein the paging cycle table further comprises a first bit field, the first bit field declares the paging cycle, and at least one value of the first bit field is associated with at least one paging cycle in the paging cycle table,
the determining module is further configured to:
obtaining a first preset value based on the first bit field, to determine that the paging cycle is eDRX=2.56s.

18. The paging apparatus according to claim 15, wherein the paging apparatus further comprises:
a receiving module, configured to receive second information, wherein the second information is used to request to use the paging cycle DRX=2.56s.

19. The paging apparatus according to claim 17, wherein the paging apparatus further comprises:
a receiving module, configured to receive second information, wherein the second information is used to request to use the paging cycle eDRX=2.56s.

20. A paging apparatus, comprising:
a determining module, configured to determine, according to type information of a terminal, whether to use a first parameter in a paging cycle, wherein the paging cycle comprises an extended discontinuous reception eDRX paging cycle, and the first parameter comprises a paging time window PTW; and
a sending module, configured to send first information based on the paging cycle, wherein the first information is used to page the terminal.

21. The paging apparatus according to claim 20, wherein the paging apparatus is an access network device, the paging cycle comprises eDRX=10.24s, and the first information comprises an identity ID of the terminal,
the determining module is specifically configured to:
determining, according to that the type of the terminal is REDCAP UE, to skip using the first parameter in the paging cycle.

22. The paging apparatus according to claim 20, wherein the paging apparatus is a core network device, the paging cycle comprises eDRX=l 0.24s, and the first information comprises information of the paging cycle.

23. The paging apparatus according to claim 22, wherein the determining module is specifically configured to:
determining, according to type of the terminal is REDCAP UE, to sskip using the first parameter in the paging cycle.

24. A paging apparatus, comprising:
a receiving module, configured to receive first information, wherein the first information is used to page a terminal; and
a determining module, configured to determine, according to the type information of the camped cell, whether to use a paging time window PTW when monitoring paging.

25. The paging apparatus according to claim 24, wherein the paging cycle comprises an extended discontinuous reception eDRX=10.24s,
the determining module is specifically configured to:
determining, according to that the type of the camped cell is a next generation nodeB gNB, to skip using the PTW when monitoring paging.

26. The paging apparatus according to claim 25, wherein the paging further comprises:
a sending module, configured to send second information, wherein the second information is used to request to use a paging cycle eDRX=10.24s.

27. A computer-readable storage medium, wherein the computer-readable storage medium stores computer programs, and when the computer programs run, the computer is enabled to perform the method according to any one of claims 1 to 6, or the computer is enabled to perform the method according to any one of claims 7 to 10, or the computer is enabled to perform the method according to any one of claims 11 to 13.

28. A chip system, comprising: a processor, configured to invoke a computer program from a memory and run the computer program, so that a paging apparatus in which the chip system is installed performs the method according to any one of claims 1 to 6, or that the computer performs the method according to any one of claims 7 to 10, or that the computer performs the method according to any one of claims 11 to 13.
